# EUROPÄISCHE PATENTSCHRIFT

(11) **EP 0 941 802 B1**
(45) Veröffentlichungstag und Bekanntmachung des Hinweises auf die Patenterteilung: **29.12.2004**
(21) Anmeldenummer: 99810125.7
(22) Anmeldetag: 12.02.1999
(51) Int. Cl.: B23Q 11/10

(54) **Bohrgerät**
Drilling apparatus
Appareil de forage

(30) Priorität: 13.03.1998 DE 19810910
(43) Veröffentlichungstag der Anmeldung: 15.09.1999
(73) Patentinhaber: HILTI Aktiengesellschaft, 9494 Schaan (LI)
(72) Erfinder: Ostermeier, Peter, 86911 Diessen (DE); Reitberger, Rudolf, 81379 München (DE)
(74) Vertreter: Wildi, Roland

(56) Entgegenhaltungen:
- DE-A- 19 619 023
- US-A- 2 902 064
- US-A- 2 946 244
- US-A- 3 398 609
- US-A- 3 413 875
- US-A- 3 547 350
- US-A- 3 577 808
- US-A- 3 767 313
- PATENT ABSTRACTS OF JAPAN vol. 016, no. 132 (M-1229), 3. April 1992 (1992-04-03) & JP 03 294106 A (HITACHI KOKI CO LTD), 25. Dezember 1991 (1991-12-25)
- PATENT ABSTRACTS OF JAPAN vol. 018, no. 289 (M-1614), 2. Juni 1994 (1994-06-02) & JP 06 055403 A (HITACHI SEIKO LTD), 1. März 1994 (1994-03-01)

## Beschreibung

Die Erfindung betrifft ein Bohrgerät mit einer Kühlmittelleitung für Kühlmittel gemäss dem Oberbegriff des Patentanspruchs 1.

Bei der Herstellung von Bohrungen in einem harten Untergrund wie Beton, Gestein, Stahl oder dergleichen ist es notwendig, der Bearbeitungsstelle eine grosse Menge an Kühlmittel zum Kühlen des Bohrwerkzeuges und zum Abtransport des Bohrkleins zuzuführen. So ist beispielsweise aus dem DE-GM 8 200 668 ein Bohrgerät bekannt, das zum Zuführen von Kühlmittel mit einer Kühlmittelleitung zusammenwirkt, die im Bereich eines Werkzeughalters in das Innere des Gehäuses des Bohrgerätes mündet, von wo das Kühlmittel in das Innere eines rohrförmigen Trägerkörpers eines Bohrwerkzeuges gelangt. Die Kühlmittelleitung steht mit einer Pumpe in Verbindung, die in einem Kühlmittelreservoir angeordnet ist und zur Förderung einer der Leistung der Pumpe entsprechenden Menge Kühlmittel vor jeder Bohroperation gesondert eingeschaltet und nach jeder Bohroperation wieder gesondert ausgeschaltet werden muss.

Die US2946244 offenbart ein Bohrgerät mit einem der Aufnahme eines Bohrwerkzeuges dienende Werkzeughalter und einer Kühlmittelleitung zur Zuführung von Kühlmittel zum Bohrwerkzeug aus einem Kühlmittetreservoir, wobei die Kühlmittelleitung mit einem Ventil zusammenwirkt, welches über einen Betätigungsschalter steuerbar ist, sowie eine Kühlmittelabfuhrleitung und ein als Stellglied des Ventils ausgebildetes Unterbrechungsglied.

Der Erfindung liegt die Aufgabe zugrunde, ein Bohrgerät zu schaffen, mit dem das Zuführen von Kühlmittel in einfacher und sicherer Weise erfolgt und zudem die der Bearbeitungsstelle zugeführte Kühlmittelmenge bedarfsgerecht einstellbar ist.

Die Lösung dieser Aufgabe erfolgt durch ein Bohrgerät, welches die im Patentanspruch 1 angeführten Merkmale aufweist.

Mit Hilfe des ersten Ventils lässt sich die Zufuhr des beispielsweise von einem externen Reservoir unter Druck zugeführten Kühlmittels schnell und sicher unterbrechen.

Zweckmässigerweise wirkt die Kühlmittelleitung mit einem zweiten Ventil zusammen, das zum ersten Ventil in Serie angeordnet ist und einen zweiten Auslasskanal aufweist, dessen Querschnitt teilweise reduzierbar ist. Dadurch ist esmöglich, die dem Bohrwerkzeug zugeführte Menge an Kühlmittel zu verändern.

Damit das zweite Ventil druckfrei gehalten werden kann, wenn sich das Bohrgerät nicht in Betrieb befindet, ist vorteilhafterweise das erste Ventil in Zuführrichtung des Kühlmittels dem zweiten Ventil vorgeschaltet.

Aus handhabungstechnischen Gründen erfolgt vorzugsweise die Reduzierung des Querschnitts der lichten Weite des ersten und des zweiten Auslasskanals der Ventile mittels jeweils eines versetzbaren Stellgliedes.

Damit eine Versetzung des Stellgliedes des zweiten Ventils erfolgen kann, unabhängig davon, ob sich das Bohrgerät in Betrieb befindet, ist zweckmässigerweise das Stellglied des zweiten Ventils mittels einer manuell betätigbaren Stellschraube versetzbar.

Aus Gründen einer leichten und einfachen Betätigung des ersten Ventils ist vorzugsweise das Stellglied des ersten Ventils mittels eines elektrischen Magnetschalters versetzbar.

Um gleichzeitig mit der Inbetriebnahme des Bohrgerätes Kühlmittel der Bearbeitungsstelle zuführen zu können, erfolgt vorzugsweise die Steuerung des Magnetschalters über einen Betätigungsschalter des Bohrgerätes.

Damit nach Abschluss eines Überkopfbohrvorganges das im Innern des Bohrwerkzeuges angesammelte Kühlmittel zurück in das Kühlmittelreservoir gelangen kann, wirkt das Bohrgerät vorteilhafterweise mit einer Kühlmittelabfuhrleitung und einem Unterbrechungsglied zusammen, das bei nicht aktiviertem Betätigungsschalter den zwischen dem Bohrwerkzeug und dem ersten Ventil liegenden Teil der Kühlmittelleitung mit der Kühlmittelabfuhrleitung verbindet.

Das Zuführen des Kühlmittels ist kontrollierbar indem vorzugsweise die Kühlmittelleitung mit einem Schauglas in Verbindung steht, das dem zweiten Ventil in Zuführrichtung des Kühlmittels nachgeschaltet ist.

Damit die beiden Ventile und das Schauglas montagefreundlich im Bohrgerät aufgenommen werden können, ist vorteilhafterweise ein Teil der Kühlmittelleitung in einer Montageplatte angeordnet, die der Aufnahme der beiden Ventile und des Schauglases dient.

Mit der Kühlmittelleitung kann beispielsweise auch eine Druckausgleicheinrichtung zusammenwirken, mit deren Hilfe der Druck des Kühlmittels konstant und anwendungsgerecht gehalten werden kann, ein nicht konstanter Kühlmittelleitungsdruck ausgeglichen wird.

Die Erfindung wird anhand von Zeichnungen, die ein Ausführungsbeispiel wiedergeben, näher erläutert. Es zeigen:
- Fig.1: ein erfindungsgemässes Bohrgerät mit eingesetztem Bohrwerkzeug, schematisch dargestellt;
- Fig. 2: ein Schaltschema zur Kühlmittelleitung und Kühlmittelabfuhrleitung.

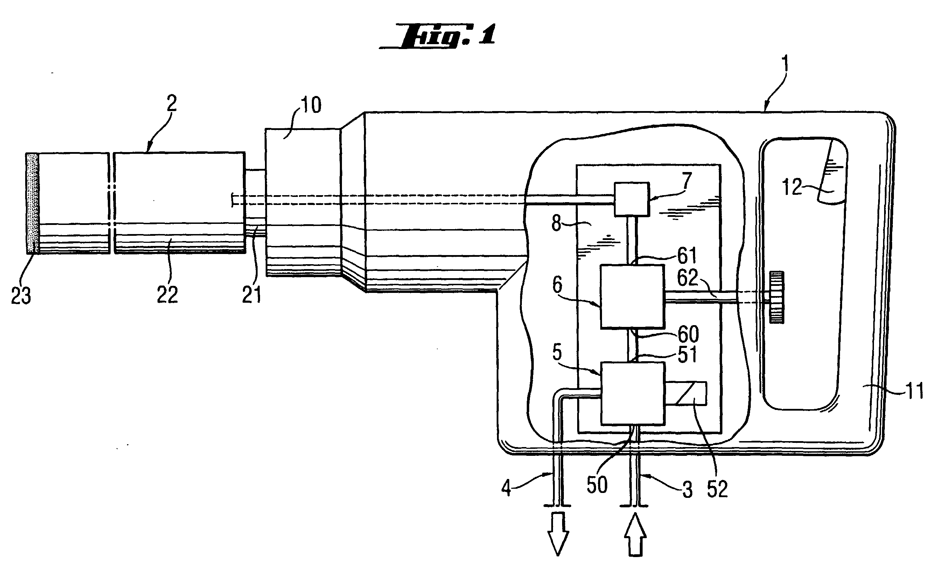

Das in der Fig. 1 dargestellte Bohrgerät weist ein Gehäuse 1, einen Handgriff 11, einen Betätigungsschalter 12, einen drehbar gelagerten Werkzeughalter 10, ein in dem Werkzeughalter 10 eingespanntes Bohrwerkzeug 2, eine Kühlmittelleitung 3 sowie eine Kühlmittelabfuhrleitung 4 auf. Die Kühlmittelleitung 3 wirkt mit einem ersten und einem zweiten Ventil 5, 6 sowie einem Schauglas 7 zusammen. Die Kühlmittelleitung 3 mündet im Bereich des Schauglases 7 in das Innere des Gehäuses 1 und von dort über den zentralen Bereich des Werkzeughalters 10 in das Innere des Bohrwerkzeuges 2. Dieses Bohrwerkzeug 2 setzt sich zusammen aus einem Einsteckende 21, einem rohrförmigen Trägerkörper 22 und einem ringförmigen Schneidenbereich 23.

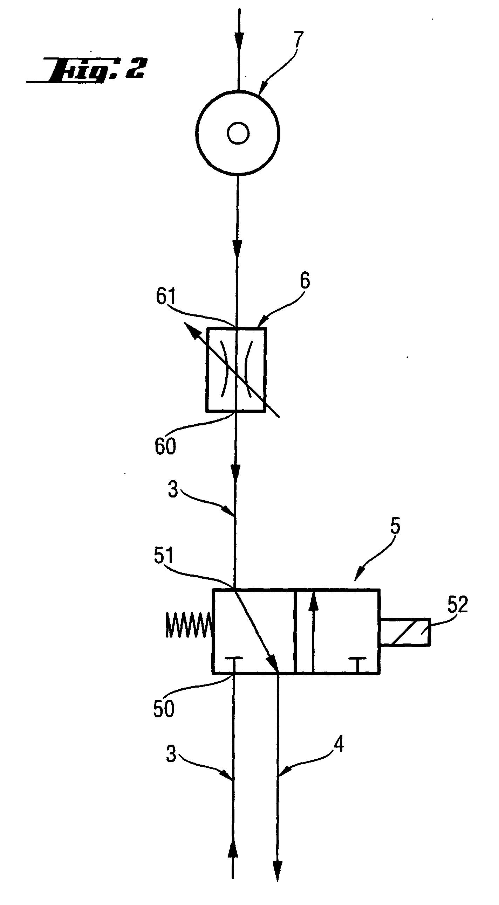

Wie die Fig. 1 und 2 zeigen, weist das erste und das zweite Ventil 5, 6 je einen Einlasskanal 50, 60 und je einen Auslasskanal 51, 61 auf. Das erste Ventil 5 ist in Zuführrichtung des Kühlmittels dem zweiten Ventil 6 in Serie vorgeschaltet. Das erste Ventil 5 weist ein versetzbares Stellglied auf, mit dem der Querschnitt der lichten Weite des Auslasskanals 51 gegen Null reduzierbar ist. Der Versetzung des Stellgliedes dient ein Magnetventil 52 . Das erste Ventil 5 steht mit einer Kühlmittelabfuhrleitung 4 in Verbindung, die in der betätigten Stellung des ersten Ventils 5 den zwischen einem ersten Einlasskanal 50 des ersten Ventils 5 und dem Bohrwerkzeug 2 liegenden Teil der Kühlmittelfeitung 3 mit der Kühlmittelabfuhrleitung 4 verbindet.

Das zweite Ventil 6 weist ein versetzbares Stellglied auf, mit dem der Querschnitt der lichten Weite des Auslasskanals 61 reduzierbar ist. Der Versetzung des Stellgliedes dient eine manuell betätigbare Stellschraube 62. Das erste Ventil 5 ist beispielsweise als 3/2 Wege-Ventil ausgebildet.

Ein Teil der Kühlmittelleitung 3 ist in einer Montageplatte 8 angeordnet, die der Aufnahme der beiden Ventile 5, 6 und des Schauglases 7 dient.

## Patentansprüche

1. Bohrgerät mit einem der Aufnahme eines Bohrwerkzeuges (2) dienenden Werkzeughalter (10) und einer Kühlmittelleitung (3) zur Zuführung von Kühlmittel zum Bohrwerkzeug (2) aus einem Kühlmittelreservoir, wobei die Kühlmittelleitung (3) mit wenigstens einem, über einen Betätigungsschalter (12) steuerbaren, ersten Ventil (5) zusammenwirkt, sowie eine Kühlmittelabfuhrleitung (4) und ein als Stellglied des ersten Ventils (5) ausgebildetes Unterbrechungsglied vorhanden ist, **dadurch gekennzeichnet, dass** bei nicht aktiviertem Betätigungsschalter (12) das Unterbrechungsglied den zwischen dem Bohrwerkzeug (2) und dem ersten Ventil (5) liegenden Teil der Kühlmittelleitung (3) mit der Kühlmittelabfuhrleitung (4) verbindet.

2. Bohrgerät nach Anspruch 1, **dadurch gekennzeichnet, dass** die Kühlmittelleitung (3) mit einem zweiten Ventil (6) zusammenwirkt, das zum ersten Ventil (5) in Serie angeordnet ist und einen zweiten Auslasskanal (61) aufweist, dessen Querschnitt teilweise reduzierbar ist.

3. Bohrgerät nach Anspruch 2, **dadurch gekennzeichnet, dass** das erste Ventil (5) in Zuführrichtung des Kühlmittels dem zweiten Ventil (6) vorgeschaltet ist.

4. Bohrgerät nach Anspruch 2 oder 3, **dadurch gekennzeichnet, dass** die Reduzierung des Querschnitts der lichten Weite eines ersten und des zweiten Auslasskanals (51, 61) der Ventile (5, 6) mittels jeweils eines versetzbaren Stellgliedes erfolgt.

5. Bohrgerät nach Anspruch 4, **dadurch gekennzeichnet, dass** das Stellglied des zweiten Ventils (6) mittels einer manuell betätigbaren Stellschraube (62) versetzbar ist.

6. Bohrgerät nach Anspruch 4, **dadurch gekennzeichnet, dass** das Stellglied des ersten Ventils (5) mittels eines elektrischen Magnetventils (52) versetzbar ist.

7. Bohrgerät nach Anspruch 6, **dadurch gekennzeichnet, dass** die Steuerung des Magnetventils (52) über den Betätigungsschalter (12) erfolgt.

8. Bohrgerät nach einem der Ansprüche 1 bis 7, **dadurch gekennzeichnet, dass** die Kühlmittelleitung (3) mit einem Schauglas (7) in Verbindung steht, das dem zweiten Ventil (6) in Zuführrichtung des Kühlmittels nachgeschaltet ist.

9. Bohrgerät nach einem der Ansprüche 2 bis 8, **dadurch gekennzeichnet, dass** ein Teil der Kühlmittelleitung (3) in einer Montageplatte (8) angeordnet ist, die der Aufnahme der beiden Ventile (5, 6) und des Schauglases (7) dient.

## Claims

1. Drill comprising a tool holder (10) serving to receive a drilling tool (2) and a coolant duct (3) for supplying coolant to the drilling tool (2) from a coolant reservoir, the coolant duct (3) cooperating with at least a first valve (5) which can be controlled by means of a control switch (12), and a coolant discharge duct (4) and a shut-off element designed as a control element for the first valve (5) being provided, **characterised in that** the shut-off element connects the part of the coolant duct (3) situated between the drilling tool (2) and the first valve (5) to the coolant discharge duct (4) when the control switch (12) is in the non-activated state.

2. Drill according to claim 1, **characterised in that** the coolant duct (3) cooperates with a second valve (6) arranged in series with the first valve (5) and has a second outlet channel (61) the cross section of which can be partially reduced.

3. Drill according to claim 2, **characterised in that** the first valve (5) is arranged upstream of the second valve (6) in the supply direction of the coolant.

4. Drill according to claim 2 or claim 3, **characterised in that** the reduction of the cross section of the clear width of a first outlet channel and the second outlet channel (51, 61) of the valves (5, 6) is effected by means of respective displaceable control elements.

5. Drill according to claim 4, **characterised in that** the control element of the second valve (6) can be displaced by means of a manually actuated adjusting screw (62).

6. Drill according to claim 4, **characterised in that** the control element of the first valve (5) can be displaced by means of an electric solenoid valve (52).

7. Drill according to claim 6, **characterised in that** the solenoid valve (52) is controlled by means of the control switch (12).

8. Drill according to one of claims 1 to 7, **characterised in that** the coolant duct (3) is connected to a sight glass (7) arranged downstream of the second valve (6) in the supply direction of the coolant.

9. Drill according to one of claims 2 to 8, **characterised in that** part of the coolant duct (3) is arranged in a mounting plate (8) serving to receive the two valves (5, 6) and the sight glass (7).

## Revendications

1. Appareil de forage avec un porte-outil (10) servant à recevoir un outil de forage (2) et avec une conduite de réfrigérant (3) pour l'amenée de réfrigérant à l'outil de forage (2) à partir d'un réservoir de réfrigérant, la conduite de réfrigérant (3) coopérant avec au moins une première soupape (5) commandée par l'intermédiaire d'un commutateur d'actionnement (12), et une conduite d'évacuation de réfrigérant (4) et un organe d'interruption conformé en organe de positionnement de la première soupape (5) étant prévus, **caractérisé en ce que**, lorsque le commutateur d' actionnement (12) n'est pas activé, l'organe d'interruption relie la partie de la conduite de réfrigérant (3) située entre l'outil de forage (2) et la première soupape (5) à la conduite d'évacuation de réfrigérant (4).

2. Outil de forage selon la revendication 1, **caractérisé en ce que** la conduite de réfrigérant (3) coopère avec une seconde soupape (6) qui est montée en série par rapport à la première soupape (5) et comporte un second canal de sortie (61) dont la section transversale est partiellement réductible.

3. Outil de forage selon la revendication 2, **caractérisé en ce que** la première soupape (5) précède la seconde soupape (6) par rapport à la direction d'amenée du réfrigérant.

4. Outil de forage selon la revendication 2 ou 3, **caractérisé en ce que** la réduction de la section transversale de l'ouverture libre d'un premier et du second canal de sortie (51, 61) des soupapes (5, 6) s'effectue à chaque fois au moyen d'un organe de positionnement déplaçable.

5. Outil de forage selon la revendication 4, **caractérisé en ce que** l'organe de positionnement de la seconde soupape (6) est déplaçable au moyen d'une vis de positionnement à actionnement manuel (62).

6. Outil de forage selon la revendication 4, **caractérisé en ce que** l'organe de positionnement de la première soupape (5) est déplaçable au moyen d'une électrovanne (52).

7. Outil de forage selon la revendication 6, **caractérisé en ce que** la commande de l'électrovanne (52) s'effectue par l'intermédiaire du commutateur d'actionnement (12).

8. Outil de forage selon une des revendications 1 à 7, **caractérisé en ce que** la conduite de réfrigérant (3) est en liaison avec un voyant (7) qui est disposé après la seconde soupape (6) par rapport à la direction d'amenée du réfrigérant.

9. Outil de forage selon une des revendications 2 à 8, **caractérisé en ce qu'**une partie de la conduite de réfrigérant (3) est disposée dans une plaque de montage (8) qui sert à recevoir les deux soupapes (5, 6) et le voyant (7).
